# EUROPÄISCHE PATENTSCHRIFT

(11) **EP 1 385 722 B1**
(45) Veröffentlichungstag und Bekanntmachung des Hinweises auf die Patenterteilung: **17.05.2006**
(21) Anmeldenummer: 02735037.0
(22) Anmeldetag: 11.04.2002
(51) Int. Cl.: B60S 1/38

(54) **WISCHBLATT ZUM REINIGEN VON SCHEIBEN, INSBESONDERE VON KRAFTFAHRZEUGEN**
WIPER BLADE FOR CLEANING PANES, IN PARTICULAR OF A MOTOR VEHICLE
BALAI D'ESSUIE-GLACE POUR LE NETTOYAGE DE VITRES, NOTAMMENT DE VEHICULES A MOTEUR

(30) Priorität: 26.04.2001 DE 10120467
(43) Veröffentlichungstag der Anmeldung: 04.02.2004
(73) Patentinhaber: ROBERT BOSCH GMBH, 70442 Stuttgart (DE)
(72) Erfinder: KRAEMER, Godelieve, 76549 Huegelsheim (DE); MAYER, Juergen, 76571 Gaggenau (DE)
(86) Internationale Anmeldenummer: PCT/DE2002/001336
(87) Internationale Veröffentlichungsnummer: WO 2002/087935

(56) Entgegenhaltungen:
- WO-A-01/92073
- DE-A- 10 000 373
- DE-A- 19 856 300
- GB-A- 2 346 318
- US-A- 2 814 820

## Beschreibung

### Stand der Technik

Bei Wischblättern mit einem federbauartigen Tragelement soll dieses über das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende formgebende Krümmung des unbelasteten Tragelements - also wenn das Wischblatt nur mit seinen beiden Enden an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung, weil während des Wischbetriebs die Wischleiste, bzw. deren an der Scheibe anliegende Wischlippe, stets mit einer bestimmten Kraft gegen die Scheibe drücken muß. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpreßdrucks auch die notwendige Querversteifung der gummielastischen Wischleiste bewirkt. Bei dem bekannten Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt. Die beiden Federschienen dieses Wischblatts sorgen in erster Linie für eine Querversteifung der Wischleiste zwischen den Krallen, wenn das Wischblatt quer zu seiner Längserstreckung über die Scheibe verschoben wird.

Die Erfindung geht aus von einem Wischblatt nach dem Oberbegriff des Anspruchs 1. Bei einem bekannten Wischblatt dieser Art (DE 197 36 368.7) ist das Wischblatt mit einer sogenannten Windabweisleiste versehen, damit den bei hohen Fahrgeschwindigkeiten auftretenden, strömungsbedingten Abhebebestrebungen des Wischblatts von der Scheibe eine zur Scheibe gerichtete Kraftkomponente entgegengesetzt wird. Dazu hat die Windabweisleiste eine sich beim Pendelwischbetrieb ergebende, vom Fahrtwind hauptsächlich beaufschlagte Vorderseite, die als Anströmfläche ausgebildet ist. Der Querschnitt der Windabweisleiste hat etwa die Form eines rechtwinkligen Dreiecks, dessen eine Kathede dem Tragelement zugewandt ist und dessen Hypothenuse die Anströmfläche darstellt. Diese schließt mit der Pendel-Verschiebeebene des Wischblatts bzw. mit der Oberfläche der Scheibe einen spitzen Winkel ein. Das benutzte Dreiecksprofil erfordert zur Herstellung der Windabweisleiste vergleichsweise sehr viel Material, was sich bei den Kosten für das Wischblatt niederschlägt. Darüber hinaus wird das Gewicht des Wischblatts unerwünscht erheblich vergrößert. Die beim Pendel-Wischbetrieb zu beschleunigende, vergrößerte Masse erfordert nämlich ein stärkeres Antriebsaggregat sowie eine aufwendigere Auslegung des diesem nachgeordneten Pendelgetriebes. Weiter kann durch die profilbedingte Biegesteifigkeit einer so geformten Windabweisleiste das Arbeitsverhalten des Tragelements bzw. des Wischblatts beeinträchtigt werden.

Es ist ferner ein Wischblatt mit einem kappenförmigen Tragsystem bekannt (GB-A-2 346 318), bei dem das Tragsystem selbst als Kunststoff-Windabweiser ausgebildet ist.

### Vorteile der Erfindung

Bei dem erfindungsgemäßen Wischblatt mit den kennzeichnenden Merkmalen des Anspruchs 1 wird das Gewicht der Windabweisleiste durch die Querschnittsgestalt eines Winkelprofils deutlich verringert. Darüber hinaus ergibt sich neben der Materialersparnis auch eine Verringerung der bewegten Masse mit den sich daraus ergebenden Vorteilen hinsichtlich der Auslegung des Antriebsaggregats und des Pendelgetriebes. Weiter wird die Biegesteifigkeit der Windabweisleiste verringert und damit deren Einfluss auf das Biege- und Federverhalten des Wischblatt-Tragelements deutlich reduziert. Die Herstellung dieser Windabweisleiste kann bei aufwendigerer Formgestaltung sowohl als Spritzteil als auch im einfachen und damit kostengünstigen Extrusionsverfahren hergestellt werden. Zwischen den beiden Schenkeln der Windabweisleiste ist mit Abstand von ihrer gemeinsamen Basis wenigstens ein die Schenkel stabilisierendes Stützmittel angeordnet. Dadurch wird auch bei der Verwendung eines relativ weichen Materials für die Herstellung der Windabweisleiste eine gewisse Versteifung erreicht, welche auch bei einer hohen Strömungsbelastung für die notwendige Formstabilität der Windabweisleiste sorgt.

Zweckmäßig ist dabei das Stützmittel durch eine mit beiden Schenkeln verbundene sich in Längsrichtung der Windabweisleiste erstreckende Wand gebildet, die sich im Bedarfsfall über die gesamte Länge der Windabweisleiste erstrecken kann.

Wenn das Tragelement zwei Federschienen umfaßt, die jeweils in einer diesen zugeordneten, zu den voneinander abgewandten Längsseiten der Wischleiste hin randoffenen Längsnuten liegen und mit äußeren Randstreifen aus diesen ragen, sind die Stützmittel mit Abstand von dem Tragelement positioniert. Dadurch ergibt sich zwischen der Wischleiste und dem Stützmittel ein Raum, in welchem sich die oberhalb des Tragelements befindlichen Bereiche der Wischleiste erstrecken können. Bei entsprechender Dimensionierung dieses Raumes wird so eine unerwünschte Reibung zwischen der Wischleiste und der Windabweisleiste vermieden.

In weiterer Ausgestaltung des Erfindungsgedankens ist die Windabweisleiste an den freien Enden der Schenkel jeweils mit krallenartigen Fortsätzen versehen, welche diese äußeren Randstreifen des Tragelements zumindest abschnittsweise passend umgreifen. Deshalb ergibt sich die Möglichkeit die Windabweisleiste auf die äußeren Randbereiche aufzurasten bzw. auf diese Randbereiche in Längsrichtung aufzuschieben. Dadurch ist es möglich auf eine Klebeverbindung zwischen Windabweisleiste und Tragelement zu verzichten. Eine derartige Klebeverbindung kann durch ihre Steifheit die zum Erreichen eines befriedigenden Wischergebnisses notwendige Flexibilität des Tragelements unerwünscht einschränken.

Dabei kann es von Vorteil sein, wenn die Windabweisleiste als Zweistoff-Bauteil ausgebildet ist, dessen mit den krallenartigen Fortsätzen versehener Längsbereich aus einem härteren Material besteht als der näher an der Basis liegende Längsbereich. Auf diese Weise kann der mit den Fortsätzen versehene Längsbereich der Windabweisleiste aus einem Stoff hergestellt werden, der hinsichtlich der Sicherung zwischen Tragelement und Windabweisleiste sich als besonders günstig erweist, während der mit der Anströmfläche versehene Bereich der Windabweisleiste aus einem Material hergestellt werden kann, der den weiteren Anforderungen an die Windabweisleiste Rechnung trägt.

Bei einem derart ausgestalteten Wischblatt kann es von Vorteil sein, wenn der Übergang vom härteren Längsbereich in den weicheren Längsbereich im Bereich der Wand erfolgt.

Gemäß einer anderen Ausführungsform der Erfindung kann es bei bestimmten Anwendungsfällen von Vorteil sein, wenn die Windabweisleiste und die Wischleiste ein einstückiges Bauteil bilden, das von einem Längskanal durchdrungen ist, in welchem das als einstückiges Federband ausgebildete Tragelement liegt und weiter die dessen oberer Bandfläche zugewandte Kanalwand, die zwischen den beiden Schenkeln der Windabweisleiste angeordneten Stützmittel bildet. Eine derartige Ausgestaltung des erfindungsgemäßen Wischblatts ist besonders kostengünstig zu montieren, weil die Windabweisleiste zusammen mit der Wischleiste einstückig hergestellt wird und somit bestimmte Montageschritte entfallen können.

Wenn die den beiden Bandflächen des Tragelements zugekehrten Wandflächen des Längskanals mit an den Bandflächen anliegenden Längsrippen versehen sind wird das Einbringen des Tragelements in den Längskanal in Folge verminderter Reibungsflächen erheblich erleichtert.

Bei einem Wischblatt mit einem einstückigen, die Windabweisleiste und die Wischleiste umfassenden Bauteil hat das Bauteil im Querschnitt gesehen drei miteinander fest verbundene Längs- Leistenbereiche, von denen die Wischleiste an der Scheibe anlegbar ist eine den Längskanal aufweisende Basisleiste wobei an der von der Windabweisleiste abgewandten Seite der Basisleiste die Wischleiste angeordnet ist. Die sich so ergebenden drei Leistenbereiche sind je nach den an diese gestellten Anforderungen auszugestalten.

Dabei kann es sehr hilfreich sein, wenn zumindest einer der Leistenbereiche des Bauteils aus einem Material besteht, dessen Härte von der Härte der anderen Leistenbereiche abweicht. Auf diese Weise ist es möglich, die zu verwendenden Materialien hinsichtlich der jeweiligen Aufgaben der einzelnen Leistenbereiche zu optimieren.

Aufgrund der an die Basisleiste gestellten Anforderungen ist es sinnvoll, wenn diese aus einem härteren Material besteht, als die Windabweisleiste. Von Vorteil kann es dabei sein, wenn der Übergang vom härteren Material in das weichere Material im Bereich der Wand des Längskanals-erfolgt, welche der oberen Bandfläche des Tragelements zugewandt ist.

Um ein befriedigendes Wischergebnis zu erreichen, ist es sinnvoll die Wischleiste aus einem weicheren Material herzustellen als die Basisleiste.

Dabei ergeben sich fertigungstechnische Vorteile, wenn der Übergang vom weicheren Material in das härtere Material im Wurzelbereich der Wischleiste erfolgt.

Um ein Verklemmen von während der Wischarbeit verschobenen Materials, wie Schnee, Eis etc. zwischen Basisleiste und Scheibe zu vermeiden, verjüngt sich im Querschnitt gesehen die Basisleiste zur Wischleiste hin.

Zum Befestigen einer Anschlußvorrichtung am Wischblatt mit deren Hilfe dieses an einem angetriebenen Wischerarm angeschlossen werden kann, ist im Mittelabschnitt der Windabweisleiste eine Aussparung zur Aufnahme dieser Vorrichtung vorgesehen. Diese Aussparung kann durch nachträgliches Herauslösen eines mittleren Zwischenabschnitts der Windabweisleiste gebildet sein. Bei einem Wischblatt mit einer separaten Windabweisleiste ist es jedoch auch denkbar diese in Längsrichtung gesehen zweiteilig auszubilden, so dass beidseitig der Anschlußvorrichtung die eine Hälfte der Windabweisleiste auf das Tragelement aufgebracht werden kann.

Zweckmäßig sind die Windabweisleiste und die Basisleiste aus einem flexiblen Kunststoff hergestellt.

Weitere Vorteile der Weiterbildungen und Ausgestaltungen der Erfindung sind in der nachfolgenden Beschreibung von in der dazugehörigen Zeichnung dargestellten Ausführungsbeispielen angegeben.

### Zeichnung

In der Zeichnung zeigen
Fig. 1 ein erfindungsgemäßes Wischblatt in perspektivischer Darstellung mit strichpunktiert angedeutetem Wischerarm,
Fig. 2 einen Querschnitt durch das Wischblatt entlang der Linie II-II in Fig. 1 in vergrößerter Darstellung und
Fig. 3 die Anordnung gemäß Fig. 2 bei einer anderen Ausführungsform des erfindungsgemäßen Wischblatts.

### Beschreibung der Ausführungsbeispiele

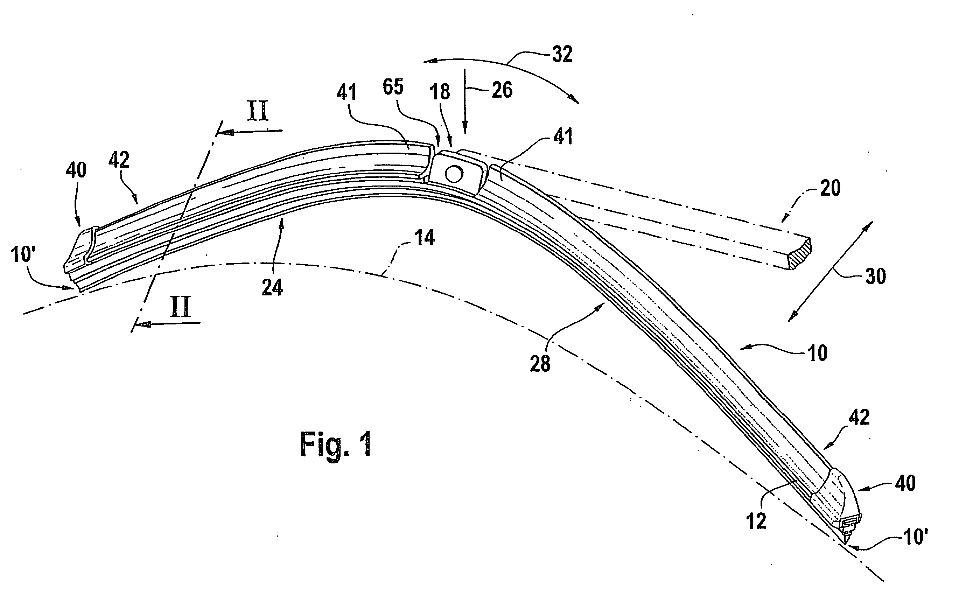

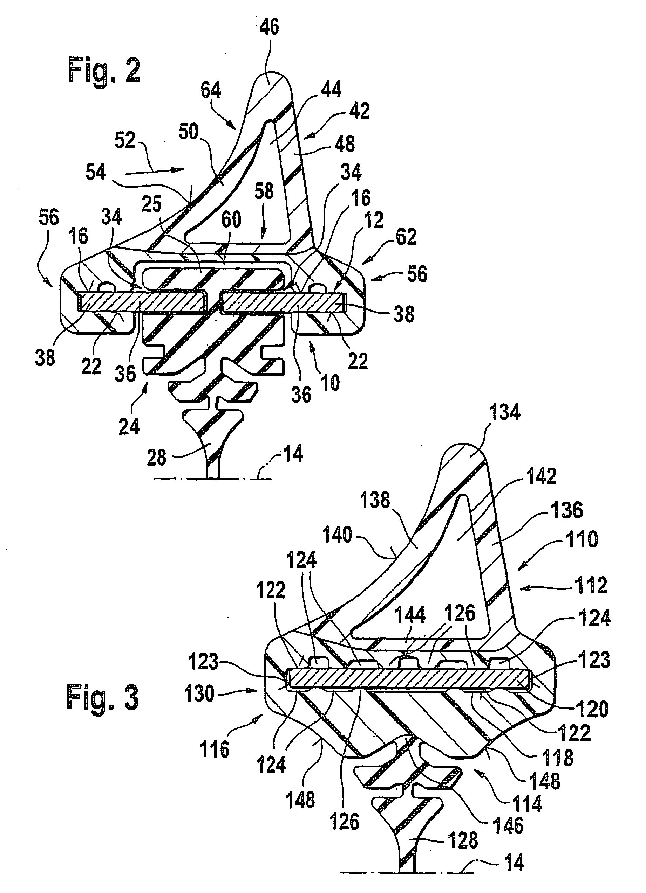

Ein in Fig. 1 dargestelltes Wischblatt 10 weist ein bandartig langgestrecktes, federelastisches, ein- oder mehrteiliges Tragelement 12 auf, welches in unbelastetem Zustand in Längsrichtung gekrümmt ist. An der von der zu wischenden Scheibe 14 abgewandten konvexen oberen bzw. äußeren Bandseite 16 (Figuren 1 und 2) des Tragelements ist in dessen Mittelabschnitt eine beispielsweise flächig an dieser anliegende Anschlußvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven unteren bzw. inneren Bandfläche oder Bandseite 22 des gekrümmten Tragelements 12 ist eine langgestreckte, gummielastische Wischleiste 24 angeordnet, die sich längsachsenparallel zum Tragelement 12 erstreckt. An dem freien Ende des Wischerarms sind nicht näher dargestellte Gegenanschlußmittel vorgesehen, welche mit der Anschlußvorrichtung 18 des Wischblatts im Sinne eines Gelenks zusammenwirken. Der Wischerarm 20 und damit auch das Wischblatt 10 sind in Richtung des Pfeiles 26 zur zu wischenden Scheibe belastet, deren zu wischende Oberfläche in Fig. 1 durch die strichpunktierte Linie 14 angedeutet ist. Da die strichpunktierte Linie die stärkste Krümmung der Scheibenoberfläche darstellen soll, ist klar ersichtlich, dass die Krümmung des mit seinen Enden 10' an der Scheibe 14 anliegenden, noch unbelasteten Wischblatts 10 stärker ist als die maximale Scheibenkrümmung. Es hat - unbelastet - also gegenüber der Scheibe einen konkaven Verlauf. Unter dem Anpreßdruck (Pfeil 26) legt sich das Wischblatt 10 mit seiner die Wischarbeit verrichtenden Wischlippe 28 über seine gesamte Länge an der Scheibenoberfläche 14 an und geht in eine der Strecklage angenäherte Arbeitslage über. Dabei baut sich im bandartigen federelastischem Tragelement 12 eine Spannung auf, welche für eine ordnungsgemäße Anlage der Wischleiste 24 bzw. deren Wischlippe 28 über deren gesamte Länge an der Kraftfahrzeugscheibe 14 sorgt. Weil die in aller Regel sphärisch gekrümmte Scheibe nicht einen Abschnitt einer Kugeloberfläche darstellt, muß sich das Wischblatt 10 gegenüber dem Wischerarm 20 während seiner Wischbewegung (Doppelpfeil 30) ständig der jeweiligen Lage und dem Verlauf der Scheibenoberfläche 14 anpassen können. Deshalb ist die eine Schwingbewegung (Doppelpfeil 32) um die Gelenkachse der Anschlußverbindung ermöglichende gelenkige Verbindung zwischen Wischerarm 20 und Wischblatt 10 notwendig.

Im Folgenden soll nun auf die besondere Ausgestaltung des erfindungsgemäßen Wischblatts 10 an Hand einer in Figur 2 dargestellten ersten Ausführungsform des Wischblatts näher eingegangen werden.

Die Ausführungsform gemäß Fig. 2 des erfindungsgemäßen Wischblatts hat eine Wischleiste 24, die an ihren beiden aneinander gegenüberliegenden, voneinander abgewandten Längsseiten mit je einer einander gegenüberliegenden Längsnuten 34 versehen ist, die zu den Längsseiten hin randoffen sind. In den Längsnuten 34 ist jeweils eine Federschiene 36 angeordnet, deren Breite größer ist als die Tiefe der Längsnuten 34. Die beiden Federschienen 36 gehören zum Tragelement 12. Sie ragen jeweils mit ihren äußeren Längs-Randbereichen bzw. Randstreifen 38 aus den Längsnuten 34 heraus. Die ordnungsgemäße Sicherung der beiden Federschienen 36 in ihren Längsnuten 34 wird durch Endkappen 40 übernommen (Fig. 1). Des Weiteren kann auch die Anschlußvorrichtung 18 (Fig. 1) zur Sicherung der Federschienen 36 in ihren Längsnuten 34 beitragen. An seiner von der Wischlippe 28 abgewandten Bandseite des Tragelements ist das Wischblatt 10 mit einer aus zwei Teilstücken 41 bestehenden Windabweisleiste 42 versehen, zwischen denen in einer Lücke 65 die Anschlußvorrichtung 18 für den Wischerarm 20 auf dem Tragelement 12 sitzt. Der wirksame Bereich der Windabweisleiste 42 erstreckt sich jeweils von den Endkappen 40 zur Anschlußvorrichtung 18 (Fig. 1). Die Windabweisleiste 42 ist aus einem elastischen Material, beispielsweise einem Kunststoff gefertigt. Sie hat einen im Wesentlichen dreieckigen Querschnitt, mit einem sich in Längserstreckung der Windabweisleiste erstreckenden Hohlraum 44, so daß sich somit -im Querschnitt gesehen- zwei von einer gemeinsamen Basis 46 aus divergierende, an der Basis miteinander verbundene Schenkel 48, 50, ergeben, von denen der Schenkel 50 an seiner Außenweite mit einer der Fahrtwind-Hauptströmungsrichtung 52 zugewandten, gekehlten Anströmfläche 54 versehen ist (Figur 2). Die beiden Schenkel 48 und 50 stützen sich mit ihren freien, der Scheibe 14 zugewandten Enden am Wischblatt bzw. an den Längs-Randbereichen 38 des Tragelements 12 ab. Dazu umgreifen sie passend mit krallenartigen Fortsätzen 56 zumindest abschnittsweise die Längs-Randbereiche 38. Sie sitzen also einerseits an der oberen Bandseite 16 des Tragelements 12 auf und untergreifen mit den Fortsätzen 56 jeweils dessen untere Bandseite 22. Zur Montage der Windabweisleiste 42 wird diese so auf die mit der Wischleiste 24 vereinigten Federschienen 36 des Tragelements 12 in Längsrichtung aufgeschoben, so daß die Längs- Randbereiche 38 von den krallenartigen Fortsätzen 56 der Windabweisleiste 42 passend umfaßt werden. Damit die aus einem elastischen Material bestehende Windabweisleiste 42 auch bei hohen Fahrgeschwindigkeiten und dem damit verbundenen hohen Winddruck die notwendige Formstabilität hat, ist zwischen den beiden Schenkeln 48, 50 der Windabweisleiste 42 mit Abstand von ihrer gemeinsamen Basis 46 ein diese Schenkel stabilisierendes Stützmittel angeordnet. Beim Ausführungsbeispiel ist dieses Stützmittel durch eine mit den beiden Schenkeln 48, 50 verbundene Wand 58 gebildet.

Weiter zeigt Figur 2, daß die Windabweisleiste 42 zwei aus verschiedenen Materialien bestehende Längsbereiche 62 und 64 hat. Die Materialien haben unterschiedliche Härten. Beim Ausführungsbeispiel ist der Längsbereich 64 -welcher die hauptsächlichen Aufgaben der Windabweisleiste mit der Anströmfläche 54 übernimmt- aus einem weicheren Material gefertigt als der Längsbereich 62, welcher insbesondere die krallenartigen Fortsätze 56 aufweist, die der Sicherung der Windabweisleiste 42 am Tragelement 12 dienen. Dabei erfolgt der Übergang von härteren Längsbereich 42 in den weicheren Längsbereich 64 im Bereich der Wand 58. Generell ist die Wand 58 mit Abstand von den krallenartigen Fortsätzen 56 bzw. dem Tragelement 12 zwischen diesem und der gemeinsamen Basis 46 der beiden Schenkel 48, 50 plaziert, so daß sich zwischen dem Tragelement und der Wand 58 eine Aussparung 60 ergibt, welche Raum für den oberhalb des Tragelements befindlichen Leistenstreifen 25 der Wischleiste 24 bietet. Dadurch wird eine die Wischarbeit störende Berührung zwischen Wischleiste 28 und Windabweisleiste 42 bzw. deren Wand 58 vermieden. Die beschriebene Zweistoff-Windabweisleiste 42 hat über ihre gesamte Länge ein gleichbleibendes Profil. Deshalb läßt sie sich besonders kostengünstig mit dem sogenannten Mehrstoff-Extrusionsverfahren herstellen.

Die Ausführungsform des erfindungsgemäßen Wischblatts 110 entsprechende Figur 3 unterscheidet sich vom Wischblatt gemäß Figur 2 besonders dadurch, daß die Windabweisleiste 112 und die Wischleiste 114 fest mit einer Basisleiste 130 verbunden sind. Es ergibt sich also ein einziges leistenförmiges Bauteil 116, dessen Basis- Leistenbereich von einem Längskanal 118 durchdrungen ist, der zur Aufnahme eines Tragelements 120 dient, welches als einstückiges, federelastisches Band ausgebildet ist. Dieser Längskanal umschließt sowohl die beiden Bandflächen 122 als auch die beiden Längkanten 123 des Tragelements 120. An den den Bandflächen zugewandten Kanalwänden sind diese mit mehreren Längsaussparungen 124 versehen, so daß sich zwischen diesen an den Bandflächen 122 anliegende Längsrippen 126 ergeben. Dadurch wird das Einführen des Tragelements 120 in den Längskanal 118 erleichtert. An der der Scheibe 114 zugewandten Unterseite der Basisleiste 130 ist die an der Scheibe anlegbare Wischleiste 114 mit ihrer Wischlippe 128 angeordnet. Die Basisleiste verjüngt sich -im Querschnitt gesehen- zur Wischleiste 114 hin, so daß sich zur Scheibe 14 geneigte Wände ergeben, was beim Wischen von vereisten oder mit Naßschnee bedeckten Scheiben besonders vorteilhaft ist. An der von der Wischleiste 114 abgewandten oberen Seite der Basisleiste 130 ist die Windabweisleiste 112 mit ihrer Anströmfläche 140 angeordnet. Sie weist ebenfalls einen Längs- Hohlraum 142 auf, der so angeordnet ist, daß zwischen diesem und dem Längskanal 118 eine die so gebildeten, von einer gemeinsamen Basis 134 aus zur Scheibe 14 divergierenden Schenkel 136, 138 verbindende Wand 144 verbleibt. Die Wand stabilisiert die beiden Schenkel 136, 138 der Windabweisleiste 112. An ihrer Unterseite ist ein Teil der Längsrippen 126 angeordnet. Weiter ist jeder der drei Leistenbereiche 112, 128, 130 des Bauteils 116 aus einem anderen Material gefertigt. Dadurch ist es möglich die jeweiligen Materialeigenschaften so zu wählen, daß den an die jeweiligen Bereiche gestellten unterschiedlichen Anforderungen Rechnung getragen werden kann. Beispielsweise können die Härtewerte eines Leistenbereichs von den Härtewerten der anderen abweichen. Besonders vorteilhaft ist es, wenn die Basisleiste 130 aus einem härteren Material besteht als die Windabweisleiste 112 und/oder die Wischleiste 114. Der Übergang vom härteren Material in das weichere Material erfolgt dann zweckmäßig im Bereich der Stabilisierungswand 144 bzw. im Wurzelbereich 146 der Wischleiste 114, wo diese in die Basisleiste 130 übergeht. Es ergeben sich also Übergangsbereiche zwischen zwei einander benachbarten Leistenbereiche 112 und 130 bzw. 130 und 114. Die genaue Lage dieser Übergangsbereiche legt der Fachmann von Fall zu Fall -unter Berücksichtigung der jeweils an das Wischblatt gestellten speziellen Anforderungen- fest.

Bei der Ausführungsform des Wischblatts 110 gemäß Fig. 3 hat das Bauteil 116 zunächst die gleiche Länge wie das Tragelement 120. Zur Sicherung des Bauteils 116 auf dem Tragelement in dessen Längsrichtung wird dieses an seinen beiden Enden mit jeweils einer Aussparung versehen, so dass die beiden Endbereiche des Tragelements 120 freigelegt und der Aufrastung von Endkappen 40 zugänglich sind. Weiter wird die Windabweisleiste 112 in ihrem Mittelabschnitt mit einer Lücke oder Aussparung versehen, welche im Prinzip der Lücke 65 in Fig. 1 entspricht. Diese Aussparung kann so tief ausgeführt werden, dass bei dieser Ausführungsform das Tragelement 120 freigelegt und damit für die Montage der Anschlußvorrichtung 18 vorbereitet wird. Bei dieser Ausführungsform hat es sich als besonders zweckmäßig erwiesen, wenn diese Lücke 65 mit einem unter der Bezeichnung "Wasserstrahlschneiden" bekannten Verfahren angebracht wird.

Sowohl die Windabweisleiste 42 und die Wischleiste 24 als auch das Bauteil 116 haben über ihre gesamte Länge ein gleichbleibendes Profil und lassen sich deshalb besonders kostengünstig mit dem sogenannten Extrusionsverfahren einstückig herstellen. Dabei ist es durchaus zweckmäßig, diese Teile mit dem sogenannten Mehrstoff-Extrusionsverfahren zu fertigen. Ein Ablängen der benötigten Strangstücke erfolgt -wie auch bei der Ausführungsform gemäß Figur 2-dann nach Bedarf.

Allen Ausführungsbeispielen ist gemeinsam, dass die Windabweisleiste 42 bzw. 112 im Querschnitt gesehen zwei von einer gemeinsamen Basis 46 bzw. 134 aus divergierende, an dieser miteinander verbundene Schenkel 48, 50 bzw. 136, 138 hat, deren freie, der Scheibe 14 zugewandten Enden sich am Wischblatt abstützen, dass an der Außenseite des einen Schenkels 50 bzw. 138 die Anströmfläche 54 bzw. 140 ausgebildet ist und dass das Profil des Querschnitts der Windabweisleiste über deren gesamte Länge gleich ist. Weiter ist bei beiden Ausführungsbeispielen zwischen den beiden Schenkeln 48, 50 bzw. der Windäbweisleiste 42 bzw. 112 mit Abstand von ihrer gemeinsamen Basis 46 bzw. 134 wenigstens ein die Schenkel stabilisierende Stützmittel angeordnet, welches durch eine mit beiden Schenkeln verbundene, sich in Längsrichtung der Windabweisleiste erstreckende Wand 58, bzw. 144 gebildet ist, die sich über die gesamte Länge der Windabweisleiste erstrecken kann.

## Patentansprüche

1. Wischblatt (10) zum Reinigen von Scheiben (14) insbesondere von Kraftfahrzeugen, mit einem bandartig langgestreckten, federelastischen Tragelement (12), an dessen der Scheibe zugewandten unteren Bandfläche (22) eine an der Scheibe anlegbare gummielastische Wischleiste (24) längsachsenparallel angeordnet ist und an dessen oberen Bandfläche (16) sich eine in Längsrichtung des Tragelements erstreckende, mit einer der Fahrtwind-Hauptströmungsrichtung (Pfeil 52) zugewandten Anströmfläche (54 bzw. 140) versehene, aus einem elastischen Material bestehende Windabweisleiste (24 bzw. 112) befindet, wobei die Windabweisleiste im Querschnitt gesehen zwei von einer gemeinsamen Basis (46 bzw. 134) aus divergierende, an dieser miteinander verbundene Schenkel (48, 50 bzw. 136, 138) hat, an der Außenseite des einen Schenkels (50 bzw. 138) die Anströmfläche (54 bzw. 140) ausgebildet ist und das Profil des Querschnitts der Windabweisleiste über deren gesamte Länge gleich ist, **dadurch gekennzeichnet, dass** zwischen den beiden Schenkeln (48, 50 bzw. 136, 138) der Windabweisleiste (24 bzw. 112) mit Abstand von ihrer gemeinsamen Basis (46 bzw. 134) wenigstens ein die Schenkel stabilisierendes Stützmittel (58 bzw. 144) angeordnet ist.

2. Wischblatt nach Anspruch 1, **dadurch gekennzeichnet, dass** das Stützmittel durch eine mit beiden Schenkeln (48, 50 bzw. 136, 138) verbundene, sich in Längsrichtung der Windabweisleiste (42 bzw. 112) erstreckende Wand (58 bzw. 144) gebildet ist.

3. Wischblatt nach Anspruch 2, **dadurch gekennzeichnet, dass** sich die Wand (58 bzw. 144) über die gesamte Länge der Windabweisleiste (42 bzw. 112) erstreckt.

4. Wischblatt nach einem der Ansprüche 1 bis 3, **dadurch gekennzeichnet, dass** das Tragelement (12) zwei Federschienen (36) umfasst die jeweils in einer diesen zugeordneten, zu den voneinander abgewandten Längsseiten der Wischleiste (24) hin randoffenen Längsnuten (34) liegen und mit äußeren Randstreifen (38) aus diesen ragen und dass die Stützmittel (58 bzw. 144) mit Abstand von dem Tragelement (12) positioniert sind.

5. Wischblatt nach Anspruch 4, **dadurch gekennzeichnet, dass** die Windabweisleiste (42) an den freien Enden ihrer Schenkel (48, 50) jeweils mit krallenartigen Fortsätzen (56) versehen ist, welche die äußeren Randstreifen (38) des Tragelements (12) zumindest abschnittsweise passend umgreifen.

6. Wischblatt nach einem der Ansprüche 1 bis 5, **dadurch gekennzeichnet, dass** die Windabweisleiste (42) als Zweistoff-Bauteil ausgebildet ist, dessen mit den krallenartigen Fortsätzen (56) versehener Längsbereich aus einem härteren Material besteht als der näher an der Basis (46) liegende Längsbereich.

7. Wischblatt nach Anspruch 6, **dadurch gekennzeichnet, dass** der Übergang vom härteren Längsbereich in den weicheren Längsbereich im Bereich der Wand (58) erfolgt.

8. Wischblatt nach einem der Ansprüche 1 bis 3, **dadurch gekennzeichnet, dass** die Windabweisleiste (112) und die Wischleiste (114) ein einstückiges Bauteil (116) bilden, das von einem Längskanal (118) durchdrungen ist, in welchem das vorzugsweise als einstückiges Federband ausgebildete Tragelement (120) liegt, und dass die dessen oberer Bandfläche (122) zugewandte Kanalwand die zwischen den beiden Schenkeln (136, 138) der Windabweisleiste (144) angeordneten Stützmittel bildet.

9. Wischblatt nach Anspruch 8, **dadurch gekennzeichnet, dass** die den beiden Bandflächen (122) des Tragelements (120) zugewandten Wandflächen des Längskanals (118) mit an den Bandflächen (122) anliegenden Längsrippen (126) versehen sind.

10. Wischblatt nach einem der Ansprüche 8 oder 9, **dadurch gekennzeichnet, dass** das Bauteil (116), im Querschnitt gesehen drei miteinander fest verbundene Längs-Leistenbereiche hat, von denen die Wischleiste (114) an der Scheibe (14) anlegbar ist und mit einer den Längskanal (118) aufweisenden Basisleiste (130) verbunden ist und dass an der von der Wischleiste abgewandten Seite der Basisleiste die Windabweisleiste (112) angeordnet ist.

11. Wischblatt nach Anspruch 10, **dadurch gekennzeichnet, dass** zumindest einer der Leistenbereiche (112, 114, 130) des Bauteils (116) aus einem Material besteht, dessen Härte von der Härte des Materials der anderen Leistenbereiche abweicht.

12. Wischblatt nach Anspruch 11, **dadurch gekennzeichnet, dass** die Basisleiste (130) aus einem härteren Material besteht als die Windabweisleiste (112).

13. Wischblatt nach Anspruch 12, **dadurch gekennzeichnet, dass** der Übergang vom härteren Material in das weichere Material im Bereich der Wand (144) des Längskanals (118) erfolgt, welche der oberen Bandfläche (122) des Tragelements (120) zugewandt ist.

14. Wischblatt nach einem der Ansprüche 11 bis 13, **dadurch gekennzeichnet, dass** die Wischleiste (114) aus einem weicheren Material besteht als die Basisleiste (130).

15. Wischblatt nach Anspruch 14, **dadurch gekennzeichnet, dass** der Übergang vom weicheren Material in das härtere Material im Wurzelbereich (146) der Wischleiste (114) erfolgt.

16. Wischblatt nach einem der Ansprüche 10 bis 15, **dadurch gekennzeichnet, dass** sich, im Querschnitt gesehen, die Basisleiste (130) zur Wischleiste (114) hin verjüngt.

17. Wischblatt nach einem der Ansprüche 1 bis 16, **dadurch gekennzeichnet, dass** im Längs-Mittelabschnitt der Windabweisleiste (42 bzw. 112) eine Aussparung (65) zur Aufnahme einer Vorrichtung (18) zum Anschließen eines angetriebenen Wischerarms (20) angeordnet ist.

18. Wischblatt nach einem der Ansprüche 1 bis 17, **dadurch gekennzeichnet, dass** die Windabweisleiste (42 bzw. 112) aus einem flexiblen Kunststoff hergestellt ist.

19. Wischblatt nach einem der Ansprüche 10 bis 18, **dadurch gekennzeichnet, dass** die Basisleiste (130) aus einem flexiblen Kunststoff gefertigt ist.

## Claims

1. Wiper blade (10) for cleaning panes (14), in particular of a motor vehicle, with a resilient supporting element (12) which is elongate in the manner of a band and on the lower band surface (22) of which, which faces the pane, an elastomeric wiper strip (24), which can be placed on the pane, is arranged parallel to the longitudinal axis and on the upper band surface (16) of which there is a wind-deflecting strip (24 or 112) which extends in the longitudinal direction of the supporting element, is provided with an approach-flow surface (54 or 140) facing the main flow direction of the relative wind (arrow 52) and is composed of an elastic material, the wind-deflecting strip, as seen in cross section, having two limbs (48, 50 or 136, 138), which diverge from a common base (46 or 134) and are connected to each other on the latter, the approach-flow surface (54 or 140) being formed on the outer side of the one limb (50 or 138) and the profile of the cross section of the wind-deflecting strip being identical over the entire length thereof, **characterized in that** at least one supporting means (58 or 144) stabilizing the limbs is arranged between the two limbs (48, 50 or 136, 138) of the wind-deflecting strip (24 or 112) at a distance from their common base (46 or 134) .

2. Wiper blade according to Claim 1, **characterized in that** the supporting means is formed by a wall (58 or 144) which is connected to the two limbs (48, 50 or 136, 138) and extends in the longitudinal direction of the wind-deflecting strip (42 or 112).

3. Wiper blade according to Claim 2, **characterized in that** the wall (58 or 144) extends over the entire length of the wind-deflecting strip (42 or 112).

4. Wiper blade according to one of Claims 1 to 3, **characterized in that** the supporting element (12) comprises two spring rails (36) which each lie in a longitudinal groove (34), which is assigned to them and is open at the edge towards the mutually remote longitudinal sides of the wiper strip (24), and protrude with outer edge strips (38) out of the said longitudinal grooves, and **in that** the supporting means (58 or 144) are positioned at a distance from the supporting element (12).

5. Wiper blade according to Claim 4, **characterized in that** the wind-deflecting strip (42) is provided at the free ends of its limbs (48, 50) with respective claw-like extensions (56) which engage in a fitting manner around the outer edge strips (38) of the supporting element (12) at least in some sections.

6. Wiper blade according to one of Claims 1 to 5, **characterized in that** the wind-deflecting strip (42) is designed as a two-material component, the longitudinal region of which, which is provided with the claw-like extensions (56), is composed of a harder material than the longitudinal region situated closer to the base (46).

7. Wiper blade according to Claim 6, **characterized in that** the transition from the harder longitudinal region into the softer longitudinal region takes place in the region of the wall (58).

8. Wiper blade according to one of Claims 1 to 3, **characterized in that** the wind-deflecting strip (112) and the wiper strip (114) form an integral component (116) which is penetrated by a longitudinal channel (118), in which the supporting element (120), which is preferably designed as an integral spring band, lies, and **in that** the channel wall facing the upper band surface (122) of the said supporting element forms the supporting means arranged between the two limbs (136, 138) of the wind-deflecting strip (144).

9. Wiper blade according to Claim 8, **characterized in that** the wall surfaces of the longitudinal channel (118), which wall surfaces face the two band surfaces (122) of the supporting element (120), are provided with longitudinal ribs (126) resting on the band surfaces (122).

10. Wiper blade according to either of Claims 8 and 9, **characterized in that** the component (116), as seen in cross section, has three longitudinal strip regions which are connected fixedly to one another and by which the wiper strip (114) can be placed on the pane (14), and is connected to a base strip (130) having the longitudinal channel (118), and **in that** the wind-deflecting strip (112) is arranged on that side of the base strip which faces away from the wiper strip.

11. Wiper blade according to Claim 10, **characterized in that** at least one of the strip regions (112, 114, 130) of the component (116) is composed of a material, the hardness of which differs from the hardness of the material of the other strip regions.

12. Wiper blade according to Claim 11, **characterized in that** the base strip (130) is composed of a harder material than the wind-deflecting strip (112).

13. Wiper blade according to Claim 12, **characterized in that** the transition from the harder material into the softer material takes place in the region of the wall (144) of the longitudinal channel (118), which wall faces the upper band surface (122) of the supporting element (120).

14. Wiper blade according to one of Claims 11 to 13, **characterized in that** the wiper strip (114) is composed of a softer material than the base strip (130).

15. Wiper blade according to Claim 14, **characterized in that** the transition from the softer material into the harder material takes place in the base region (146) of the wiper strip (114).

16. Wiper blade according to one of Claims 10 to 15, **characterized in that**, as seen in cross section, the base strip (130) tapers towards the wiper strip (114).

17. Wiper blade according to one of Claims 1 to 16, **characterized in that** a cutout (65) for receiving a device (18) for connection of a driven wiper arm (20) is arranged in the longitudinal centre section of the wind-deflecting strip (42 or 112).

18. Wiper blade according to one of Claims 1 to 17, **characterized in that** the wind-deflecting strip (42 or 112) is produced from a flexible plastic.

19. Wiper blade according to one of Claims 10 to 18, **characterized in that** the base strip (130) is manufactured from a flexible plastic.

## Revendications

1. Balai d'essuie-glace (10) pour nettoyer les vitres (14) notamment de véhicules automobiles, comportant un élément de support (12) en forme de ruban allongé, élastique comme un ressort, et dont la surface inférieure (22) tournée vers la vitre, porte une lame d'essuyage (24) élastique comme du caoutchouc, parallèle à son axe longitudinal et destinée à s'appliquer contre la vitre, sa surface supérieure (16) étant munie d'un déflecteur (24, 112) s'étendant dans la direction longitudinale de l'élément de support et ayant une surface d'attaque (54, 140) tournée dans la direction d'écoulement principal du vent de circulation (flèche 52), ce déflecteur en matière élastique ayant une section formée par deux branches (48, 50) ou (136, 138) divergentes, reliées l'une à l'autre, et dont le côté extérieur d'une branche (50, 138) forme la surface d'attaque (54, 140), le profil de la section du déflecteur étant le même sur toute la longueur,
**caractérisé par**
au moins un moyen d'appui (48, 144) stabilisant les branches, installé entre les deux branches (48, 50), (136, 138) du déflecteur (24, 112) à distance de la base commune (46, 134).

2. Balai d'essuie-glace selon la revendication 1,
**caractérisé en ce que**
le moyen d'appui est formé par une paroi (58, 144) s'étendant dans la direction longitudinale du déflecteur (42, 112), cette paroi étant reliée aux deux branches (48, 50) ou (136, 138).

3. Balai d'essuie-glace selon la revendication 2,
**caractérisé en ce que**
la paroi (58, 144) s'étend sur toute la longueur du déflecteur (42, 112).

4. Balai d'essuie-glace selon l'une des revendications 1 à 3,
**caractérisé en ce que**
l'élément de support (2) comprend deux rails élastiques (36) logés chacun dans une rainure longitudinale (34) à bord ouvert le long des grands côtés de la lame d'essuyage (24) non tournés l'un vers l'autre, et ces rails élastiques débordent par leurs bandes marginales extérieures (38) et les moyens d'appui (58, 114) sont situés à distance de l'élément de support (12).

5. Balai d'essuie-glace selon la revendication 4,
**caractérisé en ce que**
le déflecteur (42) comporte aux extrémités libres de ses branches (48, 50), des prolongements (56) en forme de griffes entourant de manière ajustée, au moins par segments, les bandes marginales extérieures (38) de l'élément de support (12).

6. Balai d'essuie-glace selon l'une des revendications 1 à 5,
**caractérisé en ce que**
le déflecteur (42) est une pièce en deux matières dont la zone longitudinale munie des prolongements (56) en forme de griffes est réalisée en une matière plus dure que la zone longitudinale plus proche de la base (46).

7. Balai d'essuie-glace selon la revendication 6,
**caractérisé en ce que**
la jonction entre la zone longitudinale plus dure et la zone longitudinale plus molle se situe au niveau de la paroi (58).

8. Balai d'essuie-glace selon l'une des revendications 1 à 3,
**caractérisé en ce que**
le déflecteur (112) et la lame d'essuyage (114) forment une seule pièce (116) traversée par un canal longitudinal (118) recevant l'élément de support (120) de préférence réalisé par un ruban élastique en une seule pièce, et la paroi de canal tournée vers la surface supérieure (122) du ruban forme les moyens d'appui installés entre les deux branches (136, 138) du déflecteur (144).

9. Balai d'essuie-glace selon la revendication 8,
**caractérisé en ce que**
les deux surfaces de paroi du canal longitudinal (118) tournées vers les faces (122) de l'élément de support (120) sont munies de nervures longitudinales (126) s'appliquant contre les faces (122) de la bande.

10. Balai d'essuie-glace selon l'une des revendications 8 ou 9,
**caractérisé en ce qu'**
en section, la pièce (116) comporte trois zones de barrettes longitudinales reliées solidairement, parmi lesquelles la lame d'essuyage (114) s'applique contre la vitre (14) et est reliée à la barrette de base (130) comportant la canal longitudinal (118) et le côté de la barrette de base non tourné vers la lame d'essuyage porte la barrette déflectrice (112).

11. Balai d'essuie-glace selon la revendication 10,
**caractérisé en ce qu'**
au moins l'une des zones de barrettes (112, 114, 130) de la pièce (116) est réalisée en une matière dont la dureté est différente de celle de la matière des autres zones de barrettes.

12. Balai d'essuie-glace selon la revendication 11,
**caractérisé en ce que**
la barrette de base (130) est réalisée en une matière plus dure que la barrette déflectrice (112).

13. Balai d'essuie-glace selon la revendication 12,
**caractérisé en ce que**
la jonction entre la matière dure et la matière souple est située au niveau de la paroi (144) du canal longitudinal (118) tournée vers la surface supérieure (122) du ruban de l'élément de support (120).

14. Balai d'essuie-glace selon l'une des revendications 11 à 13,
**caractérisé en ce que**
la lame d'essuyage (114) est réalisée en une matière plus souple que la barrette de base (130).

15. Balai d'essuie-glace selon la revendication 14,
**caractérisé en ce que**
la jonction entre la matière molle et la matière dure se situe dans la zone de pied (146) de la lame d'essuyage (114).

16. Balai d'essuie-glace selon l'une des revendications 10 à 15,
**caractérisé en ce qu'**
en section, la barrette de base (130) va en diminuant vers la lame d'essuyage (114).

17. Balai d'essuie-glace selon l'une des revendications 1 à 16,
**caractérisé par**
une cavité (65) dans le segment médian longitudinal du déflecteur (42, 112) pour recevoir un dispositif (18) d'accouplement du bras d'essuie-glace (20), entraîné.

18. Balai d'essuie-glace selon l'une des revendications 1 à 17,
**caractérisé en ce que**
le déflecteur (42, 112) est réalisé en matière plastique souple.

19. Balai d'essuie-glace selon l'une des revendications 10 à 18,
**caractérisé en ce que**
la barrette de base (130) est en matière plastique souple.
